# EUROPÄISCHE PATENTSCHRIFT

(11) **EP 2 972 101 B1**
(45) Veröffentlichungstag und Bekanntmachung des Hinweises auf die Patenterteilung: **05.12.2018**
(21) Anmeldenummer: 14709190.4
(22) Anmeldetag: 06.03.2014
(51) Int. Cl.: G01C 21/36, G06F 3/023, G06F 3/0482, G06F 17/27, G06F 3/0484, G02B 27/01

(54) **EINEM FAHRZEUG ZUGEORDNETE VORRICHTUNG MIT BUCHSTABIEREINRICHTUNG MIT LÖSCHSCHALTFLÄCHE UND/ODER LISTENAUSWAHL-SCHALTFLÄCHE**
VEHICLE SPELLER INPUT DEVICE HAVING DELETE AND/OR LIST SELECTION BUTTON
DISPOSITIF PÉRIPHÉRIQUE D'ENTRÉE POUR VÉHICULE AVEC CHAMP D'EFFAÇAGE ET/OU CHAMP DE SÉLECTION

(30) Priorität: 12.03.2013 DE 102013004244
(43) Veröffentlichungstag der Anmeldung: 20.01.2016
(73) Patentinhaber: Audi AG, 85045 Ingolstadt (DE)
(72) Erfinder: BOUAZIZ, Tahar, 85055 Ingolstadt (DE); BETZ, Michael, 85080 Gaimersheim (DE); KÖBERLE, Carolin, 85057 Ingolstadt (DE)
(74) Vertreter: Brandt, Kai
(86) Internationale Anmeldenummer: PCT/EP2014/000577
(87) Internationale Veröffentlichungsnummer: WO 2014/139649

(56) Entgegenhaltungen:
- EP-A1- 1 081 582
- EP-A1- 1 959 238
- US-A1- 2010 241 627

## Beschreibung

Die vorliegende Erfindung betrifft eine einem Fahrzeug zugeordnete Vorrichtung mit Buchstabiereinrichtung.

In modernen Fahrzeugen (Kraftfahrzeugen) ist oftmals eine Anzahl an Vorrichtungen vorhanden, bei denen und/oder für die Benutzereingaben vorgenommen werden können. Hierbei können die Vorrichtungen nicht nur aktiviert oder deaktiviert, d.h. ein- und ausgeschaltet werden, sondern es können oftmals auch Einstellungen vorgenommen, Auswahlen getroffen oder Eingaben getätigt werden.

Beispiele für derartige Vorrichtungen in Fahrzeugen sind ein satellitengestütztes Navigationssystem, eine Multi-Media-Anlage, eine Automobil-Telefonanlage oder eine in ein Fahrzeug integrierte Vorrichtung für einen Internetzugang.

Die Benutzereingaben für derartige Vorrichtungen können auf verschiedene Arten und Weisen erfolgen, wobei derzeit eine Eingabe unter Verwendung eines Dreh-/Drück-Stellers, Joysticks oder einer oder mehrerer Tasten wohl die am häufigsten verwendete Vorgehensweise darstellt. Daneben sind weitere Eingabemöglichkeiten bekannt, wie beispielsweise unter Verwendung eines Touchpad oder einer berührungsempfindlichen Anzeigeeinrichtung (Bildschirm), oder mittels Spracheingabe. In allen Fällen kann eine Anzeige der vorgenommenen Einstellungen/Auswahlen/Eingaben auf einer Anzeigeeinrichtung (Bildschirm, Head-Up-Display) erfolgen.

Bei den oben erwähnten Vorrichtungen können oder müssen zur Bedienung eine Abfolge von Zeichen (Buchstaben, Zahlen, Leerzeichen, etc.) und oder Symbolen ausgewählt oder eingegeben werden, beispielsweise bei der Zieleingabe für ein satellitengestütztes Navigationssystem, der Eingabe einer neuen Kontaktperson in die oder der Auswahl einer bekannten Kontaktperson aus der Speichereinrichtung einer Automobil-Telefonanlage, bei der Bedienung einer Vorrichtung für einen mobilen Internetzugang, etc.

Hierbei ergibt sich immer wieder das Erfordernis, dass bereits ausgewählte, eingegebene und/oder angezeigte Zeichen/Symbole gelöscht werden müssen.

Die DE 198 54 116 A1 schlägt ein multifunktionales Bedienelement für Kraftfahrzeuge mit einer alphanumerischen Eingabe- und Anzeigeeinheit vor, wobei die Eingabeeinheit ein zumindest drehbetätigbares Bedienelement aufweist, über welches auf der Anzeigeneinheit dargestellte alphanumerische Zeichen oder Symbole auswähl- und zu einer Zeichen- oder Funktionsgruppe zusammenstellbar sind. Um bei einem multifunktionalen Bedienelement dieser Art eine bessere Handhabbarkeit bei Löschvorgängen zu erreichen, ist erfindungsgemäß vorgeschlagen, dass zur Aufhebung des jeweils zuletzt angewählten oder an letzter Stelle stehenden Zeichens eine separate Löschtaste vorgesehen ist.

Die DE 103 28 200 A1 beschreibt ein Navigationsgerät für ein Kraftfahrzeug, bei dem ein Fahrtziel aus einer Zielortliste auswählbar ist, wobei in einem ersten Auswahlschritt eine Vorauswahl des den gesuchten Zielort enthaltenden Zielgebiets durch die Eingabe einer einen oder mehrere Buchstaben umfassenden Kurzbezeichnung durchführbar ist und der Zielort in einem zweiten Auswahlschritt aus einer Liste der Orte des ausgewählten Zielgebiets auswählbar ist. Fig. 1 von DE 103 28 200 A1 zeigt eine erste Bildschirmanzeige des Navigationsgeräts zur Eingabe eines Zielgebiets, wobei auf der Bildschirmanzeige eine separate Löschtaste bzw. ein separates Lösch-Icon dargestellt ist.

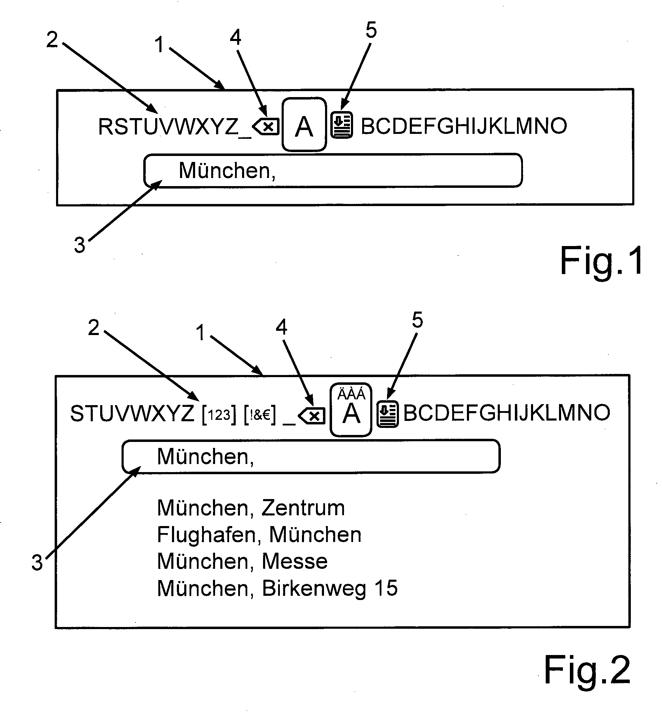

Die EP 1 548 551 A2 schlägt eine Vorrichtung zur Eingabe alphanumerischer Zeichen vor, umfassend eine Anzeigeeinheit, auf der Hauptzeichen oder Sonderzeichen darstellbar sind, wobei mittels eines Eingabemittels ein dargestelltes alphanumerisches Zeichen zur Eingabe in ein Infotainment-System auswählbar ist, wobei die Sonderzeichen in mindestens zwei Gruppen eingeteilt sind, wobei die gruppenweise zusammengefassten Sonderzeichen jeweils einem Hauptzeichen zugeordnet sind. Die Vorrichtung kann, wie in Fig. 1 dargestellt, eine separate Löschtaste umfassen.

Die DE 10 2007 023 313 A 1 beschreibt eine Anzeigeeinrichtung und ein Verfahren zum Betrieb einer elektronischen Anzeigeeinrichtung zur Anzeige mehrerer Zeichen eines Zeichensatzes, insbesondere zur Anzeige von Buchstaben und/oder Ziffern. Zumindest ein Zeichen des Zeichensatzes kann durch Betätigen einer Anwahleinrichtung angewählt und durch Betätigen einer Auswahleinrichtung zur Weiterverarbeitung ausgewählt werden. Die Zeichen werden dabei auf einer gekrümmten Bogenlinie angeordnet und angezeigt. Wenigstens eines der Zeichen kann ein Zeichen für eine Löschfunktion sein. Das Zeichen für die Löschfunktion ermöglicht es, durch seine Betätigung ein in der Zeichenkette davor oder dahinter liegendes Zeichen wieder zu löschen.

Die US 2010/0241627 schlägt eine Vorrichtung für den Informationsabruf vor, die eine Eingabe-Betriebseinheit umfasst, durch die ein Zeichen durch eine Operation eines Benutzers eingegeben werden kann, eine Datenbank, die Daten einer Vielzahl von Zeichenfolgen gespeichert hat, eine Informations-Extraktionseinheit, die eine durch die Eingabeoperation eingegebene Zeichenkette mit den Daten der Zeichenketten vergleicht, die in der Datenbank gespeichert sind, und die die Daten einer Zeichenkette entsprechend der durch die Eingabe-Betriebseinheit eingegebenen Zeichenfolge aus der Datenbank extrahiert, und eine Anzeigeeinheit, die die durch die Informations-Extraktionseinheit extrahierte Zeichenkette anzeigt, wobei die Informations-Extraktionseinheit den Vergleich durchführt durch Ersetzen eines jeden Zeichens in wenigstens einer der durch die Eingabe-Betriebseinheit eingegebenen Zeichenkette und die in der Datenbank gespeicherten Zeichenketten gegen ein Zeichen, das in einer klassifizierten Zeichengruppe enthalten ist, die in Übereinstimmung mit einem Attribut eines jeden Zeichens vorher festgelegt wurde. Wie in den Figuren 8-10 und 12A-12D angedeutet ist, können durch Betätigung einer "Input operation unit" Löschvorgänge vorgenommen werden.

Die EP 1 081 582 A1 offenbart eine Navigationsvorrichtung mit einer Bedieneinrichtung zum Auswählen von alphanumerischen Zeichen und Symbolen sowie einer Anzeigevorrichtung mit einem Eingabe- und einem Auswahlfeld.

Es ist Aufgabe der vorliegenden Erfindung, eine Vorrichtung zur Verfügung zu stellen, mit der ein Nutzer auf einfache und rasche Weise das Löschen von wenigstens einem bereits ausgewählten, eingegebenen und/oder angezeigten Zeichen und/oder Symbol durchführen kann. Es ist eine weitere Aufgabe der vorliegenden Erfindung, eine Vorrichtung zur Verfügung zu stellen, mit der ein Nutzer auf einfache und rasche Weise eine Auswahl aus einer von der Vorrichtung zur Verfügung gestellten Auswahlliste vornehmen kann. Diese Aufgaben werden gelöst durch die Vorrichtung gemäß Anspruch 1. Vorteilhafte Weiterbildungen der Erfindung sind Gegenstand der Unteransprüche und ergeben sich aus der Beschreibung sowie den beigefügten Figuren.

Erfindungsgemäß wird eine Navigationsvorrichtung vorgeschlagen, die eine Bedieneinrichtung aufweist, mit der wenigstens alphanumerische Zeichen und/oder Symbole auswählbar und zu einer Zeichen- oder Funktionsgruppe zusammenstellbar sind, und eine Anzeigevorrichtung, mit der mittels einer Anzeigeeinrichtung auswählbare Zeichen und/oder Symbole in wenigstens einem Auswahlfeld, und ausgewählte Zeichen, Symbole, Zeichen- oder Funktionsgruppe in wenigstens einem Eingabefeld anzeigbar sind.

Die Vorrichtung ist dadurch gekennzeichnet, dass sie dazu eingerichtet ist, auf der Anzeigeeinrichtung (a) unmittelbar benachbart zu einem mittels der Bedieneinrichtung angewählten, in einem Auswahlfeld angezeigten Zeichen oder Symbol eine Löschschaltfläche anzuzeigen, die mittels der Bedieneinrichtung zum Löschen von wenigstens dem zuletzt ausgewählten, in einem Eingabefeld angezeigten Zeichen oder Symbol betätigbar ist, und/oder (b) unmittelbar benachbart zu einem beliebigen mittels der Bedieneinrichtung angewählten, in einem Auswahlfeld angezeigten Zeichen oder Symbol eine Listenauswahl-Schaltfläche anzuzeigen, die mittels der Bedieneinrichtung zum Aufrufen einer Auswahlliste aufrufbar ist.

Aus dem Stand der Technik ist bekannt, dass beispielsweise mittels einer Bedienhandlung an einem Dreh-Drück-Steller einzelne Zeichen oder Symbole anwählbar sind, beispielsweise durch Drehen des Dreh-Drück-Stellers, bis eine Auswahlkennzeichnung (z.B. Auswahlcursor, Auswahlunterstreichung, Auswahlmarkierung, Auswahlumrandung) bei dem angewählten Zeichen angezeigt wird oder das angewählte Zeichen in/bei einer an einer bestimmten Position auf einer Anzeigeeinrichtung angezeigten Auswahlkennzeichnung angezeigt wird. Danach kann das Zeichen/Symbol durch eine weitere Bedienhandlung des Dreh-Drück-Stellers, beispielsweise einen Druck parallel zur Drehachse des Dreh-Drück-Stellers ausgewählt werden. Das ausgewählte Zeichen/Symbol wird dann in der Regel in einem Eingabefeld angezeigt. Eine solche Einrichtung wird als Buchstabiereinrichtung oder "Speller" bezeichnet.

Aus dem Stand der Technik sind verschiedene Lösungen bekannt, wie ein solches bereits ausgewähltes Zeichen/Symbol wieder gelöscht werden kann. Wenn hierzu ein separater Schalter oder eine separate Taste vorgesehen ist, ist dies insoweit von Nachteil, als es den apparativen Aufwand für die Vorrichtung erhöht. Ist ein separates "Lösch-Icon" vorgesehen, ist dies insoweit von Nachteil, als dieses "Lösch-Icon" in der Regel erst durch längeres Drehen an dem Dreh-Drück-Steller angewählt werden muss, bis ein Zeichen/Symbol gelöscht werden kann.

Diese Nachteile werden durch die vorliegende Erfindung überwunden. Dadurch, dass unmittelbar benachbart zu einem mittels der Bedieneinrichtung angewählten, in einem Auswahlfeld angezeigten Zeichen oder Symbol eine Löschschaltfläche angezeigt wird, ist die Auswahl der Löschschaltfläche und damit das Löschen von wenigstens einem Zeichen/Symbol in jedem Fall durch eine rasche und einfache Bedienhandlung bei der Bedieneinrichtung durchführbar.

In ähnlicher Weise ergibt sich im Vergleich zum Stand ein Vorteil in Bezug auf die Leichtigkeit und Schnelligkeit der Bedienung dadurch, dass unmittelbar benachbart zu einem mittels der Bedieneinrichtung angewählten, in einem Auswahlfeld angezeigten Zeichen oder Symbol eine Listenauswahl-Schaltfläche angezeigt wird, die mittels der Bedieneinrichtung zum Aufrufen einer Auswahlliste aufrufbar ist.

Gemäß einer ersten vorteilhaften Weiterbildung der Erfindung ist die Vorrichtung dazu eingerichtet, auswählbare Zeichen und/oder Symbole, die Löschschaltfläche und/oder die Listenauswahl-Schaltfläche in dem wenigstens einem Auswahlfeld in einer einzeiligen, linearen oder gebogenen Anordnung mittels der Anzeigeeinrichtung anzuzeigen.

Gemäß einer zweiten vorteilhaften Weiterbildung der Erfindung ist die Vorrichtung dazu eingerichtet, ein angewähltes Zeichen und/oder Symbol, und dazu unmittelbar benachbart die Löschschaltfläche und/oder die Listenauswahl-Schaltfläche an einer vorgebbaren, festen Position auf der Anzeigeeinrichtung anzuzeigen.

Ebenso ist es von Vorteil, wenn die die Vorrichtung dazu eingerichtet ist, angewählte Zeichen und/oder Symbole in einer graphisch gekennzeichneten Weise auf der Anzeigeeinrichtung anzuzeigen.

Gemäß noch einer vorteilhaften Weiterbildung der Erfindung ist die Vorrichtung dazu eingerichtet, (a) die Löschschaltfläche nur anzuzeigen, wenn im Eingabefeld bereits wenigstens eine Zeichen oder Symbol angezeigt wird, und/oder (b) die Listenauswahl-Schaltfläche nur anzuzeigen, wenn eine Auswahlliste in Abhängigkeit von dem/den bisher ausgewählten Zeichen und/oder Symbol(en) nach vorgebbaren Kriterien generiert ist. Hierdurch erhält ein Nutzer eine unmittelbare Information darüber, ob aufgrund von bisher ausgewählten Zeichen und/oder Symbolen ein Löschen von wenigstens einem Zeichen oder Symbol möglich ist, und/oder ob von der Vorrichtung eine Auswahlliste angeboten wird.

Vorteilhaft ist es weiter, wenn die erfindungsgemäße Vorrichtung dazu eingerichtet ist, bei einem mittels der Bedieneinrichtung angewählten, in einem Auswahlfeld angezeigten Buchstaben-Zeichen anzuzeigen, dass zu dem Buchstaben-Zeichen wenigstens eine Abwandlung mit einem diakritischen Zeichen existiert.

Weitere Vorteile ergeben sich, wenn die Vorrichtung dazu eingerichtet ist, bestimmte Zeichen und/oder Symbole in Form von wenigstens einer Gruppe zusammenzufassen und die wenigstens eine Gruppe in dem Auswahlfeld in Form eines Gruppen-Symbols anzuzeigen.

Vorteilhafter Weise umfasst die Bedieneinrichtung der Vorrichtung wenigstens einen Dreh-Drück-Steller, einen Joy-Stick, ein Touchpad, eine berührungsempfindliche Anzeigeeinrichtung und/oder eine Vorrichtung zur Spracheingabe und Spracherkennung. Hierbei kann vorgesehen sein, dass der Dreh-Drück-Steller um eine Drehachse dreh- und betätigbar und in wenigstens einer Richtung senkrecht zur Drehachse verschieb- und betätigbar ist.

Gemäß einer weiteren vorteilhaften Weiterbildung der Erfindung umfasst die Vorrichtung einen Smart-Speller, mittels dessen ein ausgewähltes Zeichen oder Symbol, oder eine Sequenz von ausgewählten Zeichen und/oder Symbolen mit einer gespeicherten Liste von möglichen Zeichen- und/oder Funktionsgruppen verglichen werden kann und die Vorrichtung dazu eingerichtet ist, nur noch solche Zeichen und/oder Symbole in dem wenigstens einem Auswahlfeld anzuzeigen, die aufgrund des/der ausgewählten Zeichen(s) oder Symbols/Symbolen und der in der gespeicherten Liste vorhandenen Zeichen- und/oder Funktionsgruppen als nächstes Zeichen und/oder Symbol in Frage kommen.

Die vorliegende Erfindung wird anhand der beigefügten Zeichnungen näher erläutert.

Dabei zeigen:
- Fig. 1:: Ein erstes Beispiel einer Anzeige auf der Anzeigeeinrichtung der erfindungsgemäßen Vorrichtung;
- Fig. 2:: Ein zweites Beispiel einer Anzeige auf der Anzeigeeinrichtung der erfindungsgemäßen Vorrichtung.

Die Darstellungen in den Figuren sind rein schematisch und nicht maßstabsgerecht. Innerhalb der Figuren sind gleiche oder ähnliche Elemente mit gleichen Bezugszeichen versehen.

Die nachfolgend erläuterten Ausführungsbeispiele stellen bevorzugte Ausführungsformen der vorliegenden Erfindung dar. Die vorliegende Erfindung ist selbstverständlich nicht auf diese Ausführungsformen beschränkt.

In den Figuren 1 und 2 sind jeweils Ausführungsbeispiele der vorliegenden Erfindung dargestellt, bei denen sowohl eine Löschschaltfläche 4 als auch eine Listenauswahl-Schaltfläche 5 auf der Anzeigeeinrichtung 1 (z.B. Bildschirm, Head-Up-Display) angezeigt sind. Es wird hier jedoch ausdrücklich darauf hingewiesen, dass die vorliegende Erfindung auch die Ausführungsformen umfasst, bei denen nur eine der beiden Schaltflächen angezeigt ist. Die gewählte Darstellung mit beiden Schaltflächen dient lediglich der kompakteren und übersichtlicheren Darstellung der Erfindung.

Wie in den Figuren 1 und 2 dargestellt ist, weist die Vorrichtung eine Anzeigeeinrichtung 1 auf. Auf der Anzeigeeinrichtung 1 sind auswählbare Zeichen und/oder Symbole in wenigstens einem Auswahlfeld 2, und ausgewählte Zeichen, Symbole, Zeichen- oder Funktionsgruppe in wenigstens einem Eingabefeld 3 anzeigbar. Mittels einer (in den Figuren nicht dargestellten) Bedieneinrichtung können Zeichen (Buchstaben, Zahlen, Leertaste) und Symbole (Prozent-Zeichen, Paragraphen-Zeichen, at-Zeichen, etc.) in dem Auswahlfeld 2 angewählt und anschließend ausgewählt werden. Ausgewählte Zeichen, Symbole, Zeichen- oder Funktionsgruppe können in dem wenigstens einem Eingabefeld 3 angezeigt werden.

Die Anordnung der Anzeige der Zeichen und Symbole in dem Auswahlfeld 2 ist nicht besonders beschränkt und es kann jede geeignete Anordnung gewählt sein. Beispielsweise können die Zeichen und Symbole in einer einzeiligen, geradlinigen Anordnung auf der Anzeigeeinrichtung 1 angezeigt werden, wie dies in den Figuren 1 und 2 dargestellt ist. Die Zeichen und Symbole können jedoch auch auf einer gekrümmten Linie, beispielsweise auf einer Kreissegmentbahn oder Kreisbahn angeordnet angezeigt sein. Eine weitere Darstellungsmöglichkeit wäre beispielsweise die Anzeige in Form einer virtuellen Tastatur.

Durch ein Betätigen der Bedieneinrichtung, beispielsweise einem Drehen eines Dreh-Drück-Stellers, einer Wisch-Bewegung auf einem Touchpad oder einem berührungsempfindlichen Bildschirm können Zeichen und Symbole aus dem Auswahlfeld 2 für eine Auswahl und Übernahme in das Eingabefeld 3 angewählt werden.

Hierzu kann entweder vorgesehen sein, dass aufgrund einer Betätigung der Bedieneinrichtung sich die in dem Auswahlfeld 2 angezeigten Zeichen und Symbole relativ zu einer vorgebbaren, auf der Anzeigeeinrichtung 1 an einer festen Stelle vorgesehenen "Auswahlposition" bewegen. Bei den in den Figuren 1 und 2 dargestellten Beispielen würden hierbei die Zeichen und Symbole durch eine entsprechende Bedienhandlung an der Bedieneinrichtung der Reihe nach so lange durch das mit einem größeren abgerundeten Rechteck gekennzeichneten "Auswahlrechteck" dargestellt werden, bis das auszuwählende Zeichen oder Symbol in dem "Auswahlrechteck" angezeigt würde.

Bei dieser Ausführungsform der Erfindung wird das "Auswahlrechteck" an einer festen Position auf der Anzeigeeinrichtung 1 angezeigt. Gleiches gilt für die Löschschaltfläche 4 und/oder die Listenauswahl-Schaltfläche 5.

Diese Ausführungsform hat den Vorteil, dass die Auswahlposition für einen Betrachter/Nutzer stets auf der gleichen Position auf der Anzeigeeinrichtung 1 angezeigt wird, er mit dem Blick also keiner "wandernden" Auswahlposition folgen muss. Diese Ausführungsform ist auch bei der Anzeige der Zeichen und Symbole auf einer Kreissegmentbahn oder einer Kreisbahn besonders vorteilhaft, da durch eine Anzeige der Auswahlposition an der höchsten Stelle der Kreissegmentbahn oder Kreisbahn die Zeichen und Symbole jeweils die zum Erkennen/Ablesen optimale aufrechte Ausrichtung aufweisen.

Gemäß einer weiteren Ausführungsform der vorliegenden Erfindung kann aber auch vorgesehen sein, dass sich aufgrund einer Betätigung der Bedieneinrichtung eine "Auswahlposition" relativ zu vorgebbaren, auf der Anzeigeeinrichtung 1 an festen Stellen angezeigten Zeichen und Symbolen bewegt. Hierbei werden die Zeichen und Symbole grundsätzlich an einer festen Position auf der Anzeigeeinrichtung 1 dargestellt.

Da unmittelbar benachbart zu einem angewählten Zeichen oder Symbol erfindungsgemäß vorgesehen ist, dass wenigstens eine von einer Löschschaltfläche 4 oder einer Listenauswahl-Schaltfläche 5 angezeigt wird, kann in den Fällen, in denen für die Anzeige der Schaltfläche(n) nicht ausreichend Platz bis zum nächsten Zeichen oder Symbol auf der Anzeigeeinrichtung 1 vorgesehen ist, vorgesehen sein, dass bei einer Anwahl eines Zeichens oder Symbols und der dabei erfindungsgemäß erfolgenden Anzeige von wenigstens einer Schaltfläche, die Position der Anzeige der Zeichen und Symbole auf der Anzeigeeinrichtung 1 in einem solchen Maße versetzt wird, wie die Anzeige der jeweiligen Schaltfläche an Platz benötigt.

Weiter ist eine kombinierte Bewegung der Anzeige von in dem Auswahlfeld 2 angezeigten Zeichen und Symbolen und der "Auswahlposition" von der vorliegenden Erfindung umfasst. Eine solche kombinierte Bewegung kann beispielsweise sinnvoll sein, wenn - wie dies in den Figuren 1 und 2 dargestellt ist - auf der Anzeigeeinrichtung 1 nicht ausreichend Platz zur Anzeige von allen auswählbaren Zeichen und Symbolen gegeben ist.

Bei einer solchen Position kann durch eine Betätigung der Bedieneinrichtung beispielsweise die Auswahlposition über die Anzeigeeinrichtung 1 "wandern", bis sie an einem Rand der Anzeigeeinrichtung 1 angezeigt wird. Bei einer weiteren Betätigung der Bedieneinrichtung kann dann vorgesehen sein, dass die Auswahlposition weiterhin an dem Rand der Anzeigeeinrichtung 1 angezeigt wird, nun jedoch die Zeichen und Symbole relativ zur Auswahlposition "wandern".

In den Fällen, in denen durch eine Betätigung der Bedieneinrichtung die Auswahlposition über die Anzeigeeinrichtung 1 wandert, kann vorgesehen sein, dass die Löschschaltfläche 4 und/oder die Listenauswahl-Schaltfläche 5 erst angezeigt wird, nachdem sich die Auswahlposition eine vorgebbare Zeitspanne, beispielsweise 1 s, 2 s, oder 3 s bei einem Zeichen oder Symbol befunden hat.

Soweit in der vorliegenden Anmeldung von "unmittelbar benachbart" gesprochen wird, ist damit gemeint, das zwischen der Löschschaltfläche 4 und/oder der Listenauswahl-Schaltfläche 5 und dem angewählten Zeichen oder Symbol kein weiteres Zeichen oder Symbol angezeigt wird. Zwischen dem angewählten Zeichen oder Symbol und der/den Schaltfläche(n) können jedoch graphische Elemente, wie beispielsweise eine dünne Linie angezeigt sein.

Die Löschschaltfläche 4 und/oder die Listenauswahl-Schaltfläche 5 kann grundsätzlich an jeder geeigneten Position unmittelbar benachbart zu dem angewählten Zeichen oder Symbol angezeigt werden, also beispielsweise unmittelbar links, rechts, oberhalb oder unterhalb des Zeichens oder Symbols.

Die Position der Anzeige des Auswahlfelds 2 auf der Anzeigeeinrichtung 1 ist nicht besonders beschränkt und es kann jede geeignete Position gewählt sein. Im Hinblick auf eine möglichst effiziente Ausnutzung des zur Verfügung stehenden Platzes (Anzeigeoberfläche der Anzeigeeinrichtung 1) und der logischen Abfolge der einzelnen Bedienschritte an der Vorrichtung (erst Anwahl, dann Auswahl, dann Anzeige des ausgewählten Zeichens oder Symbols in dem Eingabefeld 3) ist eine horizontale Anzeige der an- und auswählbaren Zeichen und Symbole oberhalb des Eingabefelds 3 bevorzugt.

Eine dünne Linie - wie sie oben erwähnt und in den Figuren 1 und 2 dargestellt ist - stellt ein Beispiel dafür dar, wie ein angewähltes Zeichen und/oder Symbol in einer graphisch gekennzeichneten Weise auf der Anzeigeeinrichtung 1 angezeigt werden kann. Die vorliegende Erfindung ist jedoch nicht hierauf beschränkt. Zum Beispiel kann ein angewähltes Zeichen und/oder Symbol auch im Vergleich zu den weiteren anwählbaren Zeichen und/oder Symbolen in einer vergrößerten Darstellung angezeigt werden ("Lupenfunktion"), in einer anderen Farbe, in einer anderen Formatierung (z.B. kursiv, fett, unterstrichen), etc.

Gemäß einer vorteilhaften Weiterbildung der Erfindung ist vorgesehen, dass die die Vorrichtung dazu eingerichtet ist, die Löschschaltfläche 4 nur anzuzeigen, wenn im Eingabefeld 3 bereits wenigstens eine Zeichen oder Symbol angezeigt wird. Dies ist insoweit sinnvoll, als nur in den Fällen, in denen zumindest ein Zeichen oder Symbol im Eingabefeld 3 vorhanden ist, auch ein Löschen eines Zeichens oder Symbols überhaupt in Frage kommt.

Gemäß einer weiteren vorteilhaften Weiterbildung der Erfindung ist vorgesehen, dass die Vorrichtung dazu eingerichtet ist, die Listenauswahl-Schaltfläche 5 nur anzuzeigen, wenn eine Auswahlliste in Abhängigkeit von den bisher ausgewählten Zeichen und/oder Symbol(en) nach vorgebbaren Kriterien generiert ist.

Viele einem Fahrzeug zugeordnete Vorrichtungen, bei denen ausgewählte Zeichen, Symbole, Zeichen- oder Funktionsgruppe in wenigstens einem Eingabefeld 3 anzeigbar sind, wie beispielsweise einem satellitengestützten Navigationssystem, weisen eine Datenbankstruktur mit darin enthaltenen Einträgen auf. Ebenso ist es bekannt, dass bei einer Auswahl von wenigstens einem Zeichen oder Symbol bei diesen Vorrichtungen ein Abgleich dahin stattfinden kann, ob zu dem ausgewählten Zeichen oder Symbol eine Übereinstimmung zu Einträgen in der Datenbank existieren. Ist dies der Fall, können die übereinstimmenden Einträge einem Nutzer im Wege einer Auswahlliste angeboten oder angezeigt werden und der Nutzer kann aus der angezeigten Auswahlliste eine Auswahl vornehmen.

Hierbei ist es jedoch sinnvoll, Kriterien vorzugeben, wann eine Auswahlliste bei gegebenen Übereinstimmungen erstellt und angeboten/angezeigt werden soll. Wenn beispielsweise ein Nutzer nur ein Zeichen/Symbol ausgewählt hat, kann es sein, dass zu diesem Zeichen/Symbol sehr viele Übereinstimmungen existieren, beispielsweise wenn eine Nutzer den Buchstaben "E" ausgewählt hat und in der Datenbank beispielsweise mehr als 100 Wörter (Zeichen- oder Funktionsgruppen) enthalten sind, die ein "E" enthalten. In einem solchen Fall kann vorgesehen sein, dass keine Auswahlliste generiert wird, da die Anzeige einer und eine Auswahl aus einer solchen Auswahlliste für einen Nutzer nicht sinnvoll erscheint.

In einem solchen Fall kann beispielsweise als Kriterium für die Generierung einer Auswahlliste sein, dass die Auswahlliste nicht mehr als 10, 15 oder 20 Listeneinträge enthalten darf.

Um eine "unruhige Anzeige" aufgrund der Ein- und Ausblendung von Löschschaltfläche 4 und/oder Listenauswahl-Schaltfläche 5 zu vermeiden, kann gegebenenfalls vorgesehen sein, die Art und Weise der Anzeige von Löschschaltfläche 4 und/oder Listenauswahl-Schaltfläche 5 in Abhängigkeit davon, ob die Schaltfläche(n) anwählbar ist/sind oder nicht, unterschiedlich auszugestalten. Beispielsweise könnte eine Schaltfläche in einer schwächer erkennbaren Weise (dunklere oder kontrastärmere Anzeige) angezeigt werden, wenn diese nicht anwählbar ist.

Weiter kann die erfindungsgemäße Vorrichtung dazu eingerichtet sein, bei einem mittels der Bedieneinrichtung angewählten, in einem Auswahlfeld 2 angezeigten Buchstaben-Zeichen anzuzeigen, dass zu dem Buchstaben-Zeichen wenigstens eine Abwandlung mit einem diakritischen Zeichen existiert.

Ein Beispiel für eine derartige Anzeige ist in Fig. 2 dargestellt. Wenn beispielsweise aufgrund der für die Vorrichtung gewählten Sprache zu einem Buchstaben (hier: A) ein Umlaut (hier: Ä) und Abwandlungen unter Verwendung eines Accent (hier: Á und À) existieren, kann dieser Umstand erfindungsgemäß angezeigt werden. Im in Fig. 2 dargestellten Beispiel wurde eine Anzeige der Abwandlungen in einer im Vergleich zum angewählten Buchstaben-Zeichen verkleinerten Darstellung oberhalb des Buchstaben-Zeichens gewählt. Die Art und Weise der Anzeige, dass zu dem Buchstaben-Zeichen Abwandlungen existieren, ist jedoch nicht auf diese Anzeigeart beschränkt und kann auf jede geeignete andere Weise erfolgen.

Die Abwandlungen können beispielsweise durch eine spezielle Weise der Bedienung der Bedieneinrichtung aufgerufen und anschließend wenigstens einer der Abwandlungen ausgewählt werden.

Beispielsweise kann bei einem Buchstaben, zu dem wenigstens eine Abwandlung mit einem diakritischen Zeichen existiert, die Zeichenerweiterung durch einen Longpush/Longpress auf den Buchstaben innerhalb des Zeichen-/Symbolbandes aktiviert werden. Die Anzeige des Zeichen-/Symbolbands wird dann um die jeweiligen zu dem Buchstaben gehörigen Zeichen erweitert. Nach Auswahl eines beliebigen dieser Zeichen, beispielsweise durch einen erneuten Longpush/Longpress auf das Zeichen, wird die Anzeige des Zeichen-/Symbolbands wieder auf die Grundzeichen reduziert.

Wie oben bereits erwähnt, kann in vielen Fällen der Platz für eine ausreichend große Anzeige aller zur Verfügung stehender Zeichen und/oder Symbole auf der Anzeigeeinrichtung 1 nicht ausreichen, so dass für eine Anwahl ein "Herein-Scrollen" von ursprünglich nicht auf der Anzeigeeinrichtung 1 angezeigten Zeichen und/oder Symbolen und ein "Heraus-Scrollen" von ursprünglich auf der Anzeigeeinrichtung 1 angezeigten Zeichen und/oder Symbolen erforderlich ist (z.B. in Form eines erweiterbaren Zeichen-/Symbolbands).

Das Zeichen-/Symbolband kann hierbei über einen Anfgangs- und einen Endanschlag verfügen, beispielsweise einen Anfangsanschlag beim Buchstaben "A" und einen Endanschlag bei der Ziffer "9". Um von einem solchen Anfangs- oder Endanschlag zeitsparend an das jeweils andere Ende des Zeichen-/Symbolbandes gelangen zu können, kann ein Cursorsprung vorgesehen sein. Wird an den jeweiligen Anfang oder das Ende des Zeichen-/Symbolbands gescrollt, wird beispielsweise der Cursor kurz abgefangen und gestoppt; nach einem erneuten Scrollen in die gleiche Richtung wie zuvor, kann dann beispielsweise durch eine "Wrap around Animation" der Cursor aus dem sichtbaren Bereich animiert und auf der anderen Seite des Zeichen-/Symbolbandes wieder eingeblendet werden.

Ein Herein-Scrollen und Heraus-Scrollen ist in vielen Fällen reduzier- oder sogar vermeidbar, wenn bestimmte Zeichen und/oder Symbole in Form von wenigstens einer Gruppe zusammengefasst und in Form eines Gruppen-Symbols in dem Auswahlfeld 2 angezeigt wird.

Wie in Fig. 2 gezeigt, kann eine erste Gruppe beispielsweise die Ziffern 0 bis 9 und eine zweite Gruppe eine Anzahl an Symbolen (!, &, €, %, §, *, etc.) umfassen. Es sollte für die Anzeige einer Gruppe ein geeignetes Gruppen-Symbol gewählt werden, d.h. eine Anzeige, durch die für einen Nutzer möglichst leicht erkennbar ist, welche Elemente in der Gruppe enthalten sind (im in Fig. 2 gezeigten Beispiel "[123]" für die Gruppe der Ziffern 0 bis 9, und "[!&€]" für die Gruppe der anwähl- und auswählbaren Symbole). Eine Gruppe kann ebenfalls durch eine spezielle Art und Weise der Bedienung der Bedieneinrichtung aufgerufen und anschließend wenigstens ein Elemente der Gruppe ausgewählt werden. Diesbezüglich können beispielsweise die gleichen Bedienhandlungen vorgesehen sein, wie sie oben in Bezug auf die Zeichenerweiterung aufgrund von diakritischen Zeichen beschrieben sind.

Die bei der erfindungsgemäßen Vorrichtung vorgesehene Bedieneinrichtung ist nicht besonders beschränkt und es kann jede geeignete Bedieneinrichtung vorgesehen sein. Die Bedieneinrichtung umfasst beispielsweise wenigstens einen Dreh-Drück-Steller, einen Joy-Stick, ein Touchpad, eine berührungsempfindliche Anzeigeeinrichtung und/oder eine Vorrichtung zur Spracheingabe und Spracherkennung. Es können gleichzeitig ein oder mehrere der gleichen Bedieneinrichtungen oder eine Kombination von verschiedenen Bedieneinrichtungen vorgesehen sein. Ist die Bedieneinrichtung eine berührungsempfindliche Anzeigeeinrichtung können Bedieneinrichtung und Anzeigeeinrichtung 1 der Vorrichtung identisch sein.

Als ein bevorzugtes Beispiel für eine Bedieneinrichtung der erfindungsgemäßen Vorrichtung sei ein Dreh-Drück-Steller erwähnt, der um eine Drehachse dreh- und betätigbar und in wenigstens einer Richtung senkrecht zur Drehachse verschieb- und betätigbar ist. Eine derartige Bedieneinrichtung wird oftmals auch als "Joy-Stick" bezeichnet.

Mittels eines solchen "Joy-Stick" kann beispielsweise durch eine Drehung um die Drehachse ein Zeichen oder Symbol angewählt und mittels eines Drucks parallel zu Drehachse das angewählte Zeichen oder Symbol ausgewählt werden. Oder es kann durch eine Drehung um die Drehachse die Löschschaltfläche 4 angewählt und mittels eines Drucks parallel zu Drehachse wenigstens das zuletzt ausgewählte Zeichen oder Symbol aus dem Eingabefeld 3 gelöscht werden.

Und durch ein Verschieben des "Joy-Stick" senkrecht zur Drehachse, beispielsweise in Richtung hin zum Armaturenbrett, kann beispielsweise eine Anzeige auswählbarer Abwandlungen eines Buchstaben-Zeichens geöffnet werden. Und durch ein Verschieben des "Joy-Stick" senkrecht zur Drehachse, beispielsweise in Richtung weg vom Armaturenbrett, kann beispielsweise. vorgesehen sein, dass ein Direktzugriff auf die Auswahlliste geöffnet wird.

Die erfindungsgemäße Vorrichtung kann auch einen sog. "Smart-Speller" umfassen. Mittels eines solchen "Smart-Speller" kann ein ausgewähltes Zeichen oder Symbol, oder eine Sequenz von ausgewählten Zeichen und/oder Symbolen mit einer gespeicherten Liste von möglichen Zeichen- und/oder Funktionsgruppen verglichen werden. Ergibt ein solcher Vergleich, dass für die gegebene Vorrichtung aufgrund des/der ausgewählten Zeichen und/oder Symbols/Symbole nur noch bestimmte weitere Eingaben in Frage kommen, können in vorteilhafter Weise nur noch solche Zeichen und/oder Symbole in dem wenigstens einem Auswahlfeld 2 angezeigt werden, die aufgrund des/der ausgewählten Zeichen(s) oder Symbols/Symbole und der in der gespeicherten Liste vorhandenen Zeichen- und/oder Funktionsgruppen als nächstes Zeichen und/oder Symbol in Frage kommen.

Dabei kann für das "in Frage kommen" wenigstens ein Auswahlkriterium vorgegeben sein, beispielsweise dass eine Übereinstimmung zwischen dem ausgewählten Zeichen oder Symbol, oder einer Sequenz von ausgewählten Zeichen und/oder Symbolen und einem Zeichen oder Symbol oder einer Sequenz von Zeichen und/oder Symbolen innerhalb wenigstens eines Datenelements bei den in der Speichereinrichtung vorhandenen Daten vorhanden sein muss. Wenn beispielsweise bezüglich einiger Datenelemente (z.B. Ortsnamen, Straßennamen, Vornamen, Nachnamen, Telefonnummern, E-Mail-Adressen, etc.) eine solche Übereinstimmung gegeben ist, werden durch den Smart-Speller nur noch die Zeichen und/oder Symbole in dem Auswahlfeld angezeigt, die für eine Vervollständigung der in Frage kommenden Datenelemente erforderlich sind.

Hierdurch ergibt sich für einen Nutzer eine Erleichterung bei der Anwahl des/der nächsten Zeichen(s) oder Symbols/Symbole und es wird die Gefahr eine Fehlanwahl und/oder Fehlauswahl verringert.

Auf der Anzeigeeinrichtung 1 der erfindungsgemäßen Vorrichtung können selbstverständlich weitere Elemente angezeigt werden, wie beispielsweise ein Hinweis- oder Hilfetext, ein Icon, bei dessen Auswahl Optionen der Vorrichtung konfigurierbar sind, Elemente einer zur Verfügung stehenden Auswahlliste (wie beispielhaft in Fig. 2 dargestellt), etc. Diese Elemente können ebenfalls mittels entsprechender Bedienhandlungen aktivierbar sein.

Die in den Figuren 1 und 2 dargestellten Beispiele beziehen sich auf ein Navigationssystem. In nicht erfindungsgemäßen Varianten kann dieses Konzept für alle Arten von einem Fahrzeug zugeordneten Vorrichtungen verwendet werden, bei denen das Anwählen und Auswählen von Zeichen und/oder Symbolen, und das Löschen von Zeichen und/oder Symbolen und/oder das Aufrufen von und Auswählen aus Auswahllisten vorkommt oder vorkommen kann, wie beispielsweise eine Multi-Media-Anlage, eine Automobil-Telefonanlage oder ein in einem Fahrzeug integrierte Vorrichtung für einen Internetzugang.

Da einem Fachmann bekannt ist, wie die erfindungsgemäße Vorrichtung, die Anzeigevorrichtung mit der Anzeigeeinrichtung 1 (Bildschirm, Head-Up-Display) aufgebaut sein kann und wie die Komponenten der Vorrichtung zusammenwirken müssen, damit die erfindungsgemäße Vorrichtung die in der vorliegenden Anmeldung beschriebenen Eigenschaften aufweist, braucht im vorliegenden Fall hierauf nicht näher eingegangen zu werden.

Durch die vorliegende Erfindung wird einem Nutzer der erfindungsgemäßen Vorrichtung eine optimale Möglichkeit zum Löschen von bereits ausgewählten oder angezeigten Zeichen oder Symbolen an die Hand gegeben. Gleiches gilt für den Zugriff auf eine von der Vorrichtung zur Verfügung gestellte Auswahlliste.

Hierdurch ergibt sich eine optimale Unterstützung für den Nutzer. Auch verringert sich die Zeitdauer und die Aufmerksamkeit, die ein Nutzer für den Auswahl-/Eingabevorgang benötigt, wodurch eine im Sinne der Verkehrssicherheit unerwünschte Ablenkung des Fahrers vom Straßenverkehr minimiert wird.

## Patentansprüche

1. Navigationsvorrichtung mit einer Bedieneinrichtung, mit der wenigstens alphanumerische Zeichen und/oder Symbole auswählbar und zu einer Zeichen- oder Funktionsgruppe zusammenstellbar sind, und mit einer Anzeigevorrichtung, mit der mittels einer Anzeigeeinrichtung (1) auswählbare Zeichen und/oder Symbole in wenigstens einem Auswahlfeld (2), und ausgewählte Zeichen, Symbole, Zeichen- oder Funktionsgruppen in wenigstens einem Eingabefeld (3) anzeigbar sind,
**dadurch gekennzeichnet, dass**
die Vorrichtung dazu eingerichtet ist, auf der Anzeigeeinrichtung
(a) unmittelbar benachbart zu einem mittels der Bedieneinrichtung angewählten, in dem Auswahlfeld (2) angezeigten Zeichen oder Symbol eine Löschschaltfläche (4) anzuzeigen, die mittels der Bedieneinrichtung zum Löschen von wenigstens dem zuletzt ausgewählten, in einem Eingabefeld (3) angezeigten Zeichen oder Symbol betätigbar ist, und/oder
(b) unmittelbar benachbart zu einem mittels der Bedieneinrichtung angewählten, in dem Auswahlfeld (2) angezeigten Zeichen oder Symbol eine Listenauswahl-Schaltfläche (5) anzuzeigen, die mittels der Bedieneinrichtung zum Aufrufen einer Auswahlliste aufrufbar ist.

2. Vorrichtung gemäß Anspruch 1,
**dadurch gekennzeichnet, dass**
die Vorrichtung dazu eingerichtet ist,
auswählbare Zeichen und/oder Symbole, die Löschschaltfläche (4) und/oder die Listenauswahl-Schaltfläche (5) in dem wenigstens einem Auswahlfeld (2) in einer einzeiligen, linearen oder gebogenen Anordnung mittels der Anzeigeeinrichtung (1) anzuzeigen.

3. Vorrichtung gemäß Anspruch 1 oder 2,
**dadurch gekennzeichnet, dass**
die Vorrichtung dazu eingerichtet ist,
ein angewähltes Zeichen und/oder Symbol, und dazu unmittelbar benachbart die Löschschaltfläche (4) und/oder die Listenauswahl-Schaltfläche (5) an einer vorgebbaren, festen Position auf der Anzeigeeinrichtung (1) anzuzeigen.

4. Vorrichtung gemäß einem der vorhergehenden Ansprüche,
**dadurch gekennzeichnet, dass**
die Vorrichtung dazu eingerichtet ist,
ein angewähltes Zeichen und/oder Symbol in einer graphisch gekennzeichneten Weise auf der Anzeigeeinrichtung (1) anzuzeigen.

5. Vorrichtung gemäß einem der vorhergehenden Ansprüche,
**dadurch gekennzeichnet, dass**
die Vorrichtung dazu eingerichtet ist,
(a) die Löschschaltfläche (4) nur anzuzeigen, wenn im Eingabefeld (3) bereits wenigstens ein Zeichen oder Symbol angezeigt wird, und/oder
(b) die Listenauswahl-Schaltfläche (5) nur anzuzeigen, wenn eine Auswahlliste in Abhängigkeit von dem/den bisher ausgewählten Zeichen und/oder Symbol(en) nach vorgebbaren Kriterien generiert ist.

6. Vorrichtung gemäß einem der vorhergehenden Ansprüche,
**dadurch gekennzeichnet, dass**
die Vorrichtung dazu eingerichtet ist,
bei einem mittels der Bedieneinrichtung angewählten, in einem Auswahlfeld (2) angezeigten Buchstaben-Zeichen anzuzeigen, dass zu dem Buchstaben-Zeichen wenigstens eine Abwandlung mit diakritischem Zeichen existiert.

7. Vorrichtung gemäß einem der vorhergehenden Ansprüche,
**dadurch gekennzeichnet, dass**
die Vorrichtung dazu eingerichtet ist,
bestimmte Zeichen und/oder Symbole in Form von wenigstens einer Gruppe zusammenzufassen und die wenigstens eine Gruppe in dem Auswahlfeld (2) in Form eines Gruppen-Symbols anzuzeigen.

8. Vorrichtung gemäß einem der vorhergehenden Ansprüche,
**dadurch gekennzeichnet, dass**
die Bedieneinrichtung wenigstens einen Dreh-Drück-Steller, Joy-Stick, ein Touchpad, eine berührungsempfindliche Anzeigeeinrichtung (1) und/oder eine Vorrichtung zur Spracheingabe und Spracherkennung umfasst.

9. Vorrichtung gemäß Anspruch 8,
**dadurch gekennzeichnet, dass**
der Dreh-Drück-Steller um eine Drehachse dreh- und betätigbar und in wenigstens einer Richtung senkrecht zur Drehachse verschieb- und betätigbar ist.

10. Vorrichtung gemäß einem der vorhergehenden Ansprüche,
**dadurch gekennzeichnet, dass**
sie einen Smart-Speller umfasst, mittels dessen ein ausgewähltes Zeichen oder Symbol, oder eine Sequenz von ausgewählten Zeichen und/oder Symbolen mit einer gespeicherten Liste von möglichen Zeichen- und/oder Funktionsgruppen verglichen werden kann und
die Vorrichtung dazu eingerichtet ist, nur noch solche Zeichen und/oder Symbole in dem wenigstens einem Auswahlfeld (2) anzuzeigen, die aufgrund des/der ausgewählten Zeichen(s) oder Symbols/Symbole und der in der gespeicherten Liste vorhandenen Zeichen- und/oder Funktionsgruppen als nächstes Zeichen und/oder Symbol in Frage kommen.

## Claims

1. Navigation device having an operating device with which at least alphanumeric characters and/or symbols are selectable and combinable to a character or function group, and having a display device with which characters and/or symbols selectable by means of a display device (1) are displayable in at least one selection field (2), and selected characters, symbols, character groups or function groups are displayable in at least one input field (3),
**characterised in that**
the device is adapted, on the display device
a) to display directly adjacently to a character or symbol displayed in the selection field (2), selected by means of the operating device, a delete button (4), which by means of the operating device is actuatable for deleting at least the last selected character or symbol displayed in an input field (3), and/or
b) to display directly adjacently to a character or symbol displayed in the selection field (2), selected by means of the operating device, a list selection button (5), which by means of the operating device is callable for calling up a selection list.

2. Device according to claim 1,
**characterised in that**
the device is adapted
to display by means of the display device (1) selectable characters and/or symbols, the delete button (4) and/or the list selection button (5) in the at least one selection field (2) in a one-line, linear or bent arrangement.

3. Device according to claim 1 or 2,
**characterised in that**
the device is adapted
to display at a pre-determinable, fixed position on the display device (1) a selected character and/or symbol, and directly adjacent thereto the delete button (4) and/or the list selection button (5).

4. Device according to any of the preceding claims,
**characterised in that**
the device is adapted
to display on the display device (1) a selected character and/or symbol in a graphically characterised manner.

5. Device according to any of the preceding claims,
**characterised in that**
the device is adapted
a) to display the delete button (4) only when in the input field (3) already at least one character or symbol is displayed, and/or
b) to display the list selection button (5) only when a selection list is generated according to pre-determinable criteria depending on the previously selected character(s) and/or symbol(s).

6. Device according to any of the preceding claims,
**characterised in that**
the device is adapted
to display in the case of a letter character displayed in a selection field (2), selected by means of the operating device, that at least one variation with diacritical marks exists for the letter character.

7. Device according to any of the preceding claims,
**characterised in that**
the device is adapted
to combine specific characters and/or symbols in the form of at least one group and to display the at least one group in the selection field (2) in the form of a group symbol.

8. Device according to any of the preceding claims,
**characterised in that**
the operating device comprises at least one turn press actuator, joystick, one touchpad, one touch sensitive display device (1) and/or a device for speech input and speech recognition.

9. Device according to claim 8,
**characterised in that**
the turn press actuator is rotatable and operatable around a rotation axis and shiftable and operatable in at least one direction perpendicular to the rotation axis.

10. Device according to any of the preceding claims,
**characterised in that**
it comprises a smart speller by means of which a selected character or symbol, or a sequence of selected characters and/or symbols can be compared with a stored list of possible character groups and/or function groups and
the device is adapted to display in the at least one selection field (2) only such characters and/or symbols which are possible as next character and/or symbol on the basis of the selected character(s) or symbol/symbols and the character groups and/or function groups available in the stored list.

## Revendications

1. Dispositif de navigation comportant un dispositif de commande, avec lequel on peut sélectionner au moins des caractères alphanumériques et/ou des symboles et les regrouper dans un groupe de caractères ou un groupe de fonctions, et un dispositif d'affichage, avec lequel des caractères et/ou des symboles sélectionnables au moyen d'un appareil d'affichage (1) peuvent être affichés dans au moins un champ de sélection (2) et des caractères, des symboles, des groupes de caractères ou des groupes de fonctions sélectionnés peuvent être affichés dans au moins un champ de saisie (3),
**caractérisé en ce que**
le dispositif est conçu pour afficher sur l'appareil d'affichage
(a) directement au voisinage d'un caractère ou d'un symbole sélectionné au moyen du dispositif de commande et affiché dans le champ de sélection (2) une interface de commande d'effacement (4) qui peut être commandée au moyen du dispositif de commande pour effacer au moins le caractère ou le symbole affiché dans un champ de saisie (3) sélectionné en dernier lieu et/ou
(b) directement au voisinage d'un caractère ou un symbole sélectionné au moyen du dispositif de commande et affiché dans le champ de sélection (2) une interface de commande de sélection de liste (5) qui peut être appelée au moyen du dispositif de commande pour afficher une liste de sélection.

2. Dispositif selon la revendication 1,
**caractérisé en ce que**
le dispositif est conçu
pour afficher des caractères et/ou des symboles sélectionnables, l'interface de commande d'effacement (4) et/ou l'interface de commande de sélection de liste (5) dans au moins un champ de sélection (2) selon un agencement monolinéaire, linéaire ou recourbé au moyen de l'appareil d'affichage (1).

3. Dispositif selon la revendication 1 ou 2,
**caractérisé en ce que**
le dispositif est conçu
pour afficher un caractère et/ou un symbole sélectionné(s) et directement au voisinage de ceux-ci l'interface de commande d'effacement (4) et/ou l'interface de commande de sélection de liste (5) dans une position fixe prédéfinissable sur l'appareil d'affichage (1).

4. Dispositif selon l'une quelconque des revendications précédentes,
**caractérisé en ce que**
le dispositif est conçu
pour afficher un caractère et/ou un symbole sélectionné(s) de manière **caractérisée** au plan graphique sur l'appareil d'affichage (1).

5. Dispositif selon l'une quelconque des revendications précédentes,
**caractérisé en ce que**
le dispositif est conçu
(a) pour afficher l'interface de commande d'effacement (4) uniquement si au moins un caractère ou un symbole est déjà affiché dans le champ de saisie (3) et/ou
(b) afficher l'interface de commande de sélection de liste (5) uniquement si une liste de sélection est générée en fonction du ou des caractères et/ou du ou des symboles sélectionnés jusque là selon des critères prédéfinissables.

6. Dispositif selon l'une quelconque des revendications précédentes,
**caractérisé en ce que**
le dispositif est conçu
pour afficher dans un caractère en lettre sélectionné au moyen du dispositif de commande et affiché dans un champ de sélection (2) qu'au moins une modification au caractère en lettre existe par un caractère diacritique.

7. Dispositif selon l'une quelconque des revendications précédentes,
**caractérisé en ce que**
le dispositif est conçu
pour regrouper des caractères et/ou des symboles déterminés sous la forme d'au moins un groupe et afficher le au moins un groupe dans le champ de sélection (2) sous la forme d'un symbole de groupe.

8. Dispositif selon l'une quelconque des revendications précédentes,
**caractérisé en ce que**
le dispositif de commande comprend au moins un actionneur tourner-pousser, un manche à balai, une touche tactile, un appareil d'affichage (1) sensible au contact et/ou un dispositif de saisie vocale et de reconnaissance vocale.

9. Dispositif selon la revendication 8,
**caractérisé en ce que**
l'actionneur tourner-pousser peut être soumis à une rotation autour d'un axe de rotation et commandé et peut être déplacé et commandé dans au moins une direction perpendiculaire à l'axe de rotation.

10. Dispositif selon l'une quelconque des revendications précédentes,
**caractérisé en ce que**
il comprend un dispositif de saisie intelligente au moyen duquel un caractère ou un symbole sélectionné ou une séquence de caractères et/ou de symboles sélectionnés peut être comparé(e) à une liste mémorisée de groupes de caractères et/ou de fonctions possibles et
le dispositif est conçu de manière à afficher encore uniquement les caractères et/ou les symboles du au moins un champ de sélection (2), qui sont pris en compte en raison du ou des caractères ou du ou des symboles sélectionnés et des groupes de caractères et/ou de fonctions présents dans la liste mémorisée comme prochain caractère et/ou symbole.
